# EUROPEAN PATENT SPECIFICATION

(11) **EP 3 306 211 B1**
(45) Date of publication and mention of the grant of the patent: **25.11.2020**
(21) Application number: 15894291.2
(22) Date of filing: 30.10.2015
(51) Int. Cl.: F24F 7/08, F24F 13/22, F24F 12/00, F24F 13/28, F24F 13/20, F24F 13/30

(54) **HEAT EXCHANGE-TYPE VENTILATION DEVICE**
BELÜFTUNGSVORRICHTUNG VOM WÄRMEAUSTAUSCHTYP
DISPOSITIF DE VENTILATION DE TYPE À ÉCHANGE DE CHALEUR

(30) Priority: 29.05.2015 WO PCT/JP2015/065677; 29.05.2015 WO PCT/JP2015/065678; 29.05.2015 WO PCT/JP2015/065679
(43) Date of publication of application: 11.04.2018
(73) Proprietor: Mitsubishi Electric Corporation, Chiyoda-ku Tokyo 100-8310 (JP)
(72) Inventor: AOKI, Hiroki, Tokyo 100-8310 (JP); MIYAZAKI, Yuki, Tokyo 100-8310 (JP); IWATA, Koji, Tokyo 100-8310 (JP); FUJII, Yoshinori, Tokyo 102-0073 (JP); KATO, Shinya, Tokyo 102-0073 (JP)
(74) Representative: Mewburn Ellis LLP
(86) International application number: PCT/JP2015/080855
(87) International publication number: WO 2016/194259

(56) References cited:
- WO-A1-2005/100873
- JP-A- H05 223 305
- JP-A- H07 293 960
- JP-A- H09 203 547
- JP-A- 2004 263 893
- JP-A- 2005 331 142
- JP-A- 2006 064 316
- US-A1- 2008 017 362

## Description

### Field

The present invention relates to a heat-exchange type ventilation apparatus that provides ventilation while allowing heat exchange between a supply airflow and a discharge airflow.

### Background

It is conventional to use a heat-exchange type ventilation apparatus that includes a main body having a supply air path and a discharge air path formed therein and a heat exchanger placed inside the main body and that provides ventilation while allowing heat exchange between a supply airflow passing through the supply air path and a discharge airflow passing through the discharge air path.

The heat exchanger is provided with a supply air inlet surface in which a supply airflow flows and a discharge air inlet surface in which a discharge airflow flows. The heat-exchange type ventilation apparatus includes a supply air filter that covers the supply air inlet surface and catches dust and the like included in the supply airflow, and a discharge air filter that covers the discharge air inlet surface and catches dust and the like included in the discharge airflow. A heat-exchange type ventilation apparatus disclosed in Patent Literature 1 includes a positioning member for positioning a heat exchanger in a main body.

### Citation List

### Patent Literature

Patent Literature 1: Japanese Patent Application Laid-open No. 2001-263752
Patent Literature 2: JPH05223305 discloses heat exchanging device

### Summary

### Technical Problem

As described above, the supply air filter and the discharge air filer are provided inside the main body in addition to the heat exchanger. When a positioning member for positioning the supply air filter and a positioning member for positioning the discharge air filter are further provided inside the main body, a problem arises in that the number of components increases.

The present invention has been achieved in view of the above, and an object of the present invention is to provide a heat-exchange type ventilation apparatus that enables a supply air filter and a discharge air filter to be positioned inside a main body while an increase in the number of components is suppressed.

### Solution to Problem

To solve the above problems and achieve the object, the heat-exchange type ventilation apparatus according to the present invention is as set forth in claim 1.

### Advantageous Effects of Invention

A heat-exchange type ventilation apparatus according to the present invention produces an effect of enabling a supply air filter and a discharge air filter to be positioned inside a main body while an increase in the number of components is suppressed.

### Brief Description of Drawings

FIG. 1 is an exploded perspective view of a heat-exchange type ventilation apparatus according to a first embodiment of the present invention as viewed from the top surface side.
FIG. 2 is an exploded perspective view of the heat-exchange type ventilation apparatus according to the first embodiment as viewed from the bottom surface side.
FIG. 3 is a plan view of the heat-exchange type ventilation apparatus according to the first embodiment.
FIG. 4 is a cross-sectional view of the heat-exchange type ventilation apparatus according to the first embodiment as viewed from the side thereof.
FIG. 5 is a perspective view of a heat exchanger according to the first embodiment.
FIG. 6 is an exploded perspective view of the heat exchanger according to the first embodiment.
FIG. 7 is a partially enlarged cross-sectional view of a corner portion of the heat exchanger according to the first embodiment.
FIG. 8 is a partially enlarged cross-sectional view of a corner portion of the heat exchanger accommodated in a housing in the heat-exchange type ventilation apparatus according to the first embodiment.
FIG. 9 is a perspective view of a supply air filter frame included in a supply air filter and a discharge air filter frame included in a discharge air filter according to the first embodiment.
FIG. 10 is a partially enlarged perspective view of the supply air filter frame according to the first embodiment.
FIG. 11 is an exploded perspective view of an air supplying fan and an air discharging fan in the heat-exchange type ventilation apparatus according to the first embodiment.
FIG. 12 is a partially enlarged cross-sectional view of a portion D illustrated in FIG. 4.
FIG. 13 is a partially enlarged perspective view of the portion D illustrated in FIG. 4.
FIG. 14 is a partially enlarged cross-sectional view of a portion A illustrated in FIG. 4, in which the heat exchanger, the supply air filter, and the discharge air filter are omitted.
FIG. 15 is a perspective view of a rib frame body according to the first embodiment.

### Description of Embodiments

A heat-exchange type ventilation apparatus according to embodiments of the present invention will now be described in detail with reference to the drawings. The present invention is not limited to the embodiments.

### First embodiment.

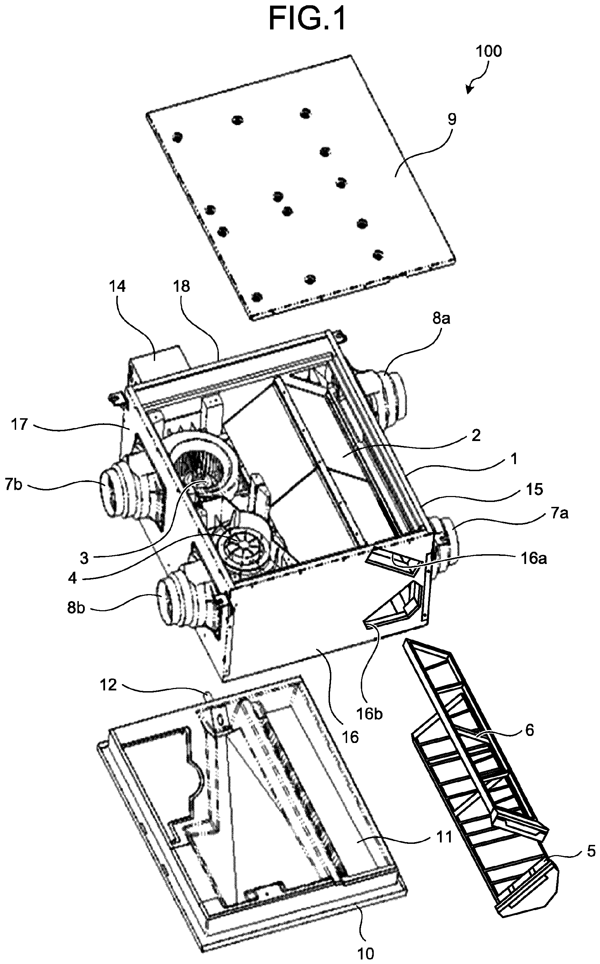

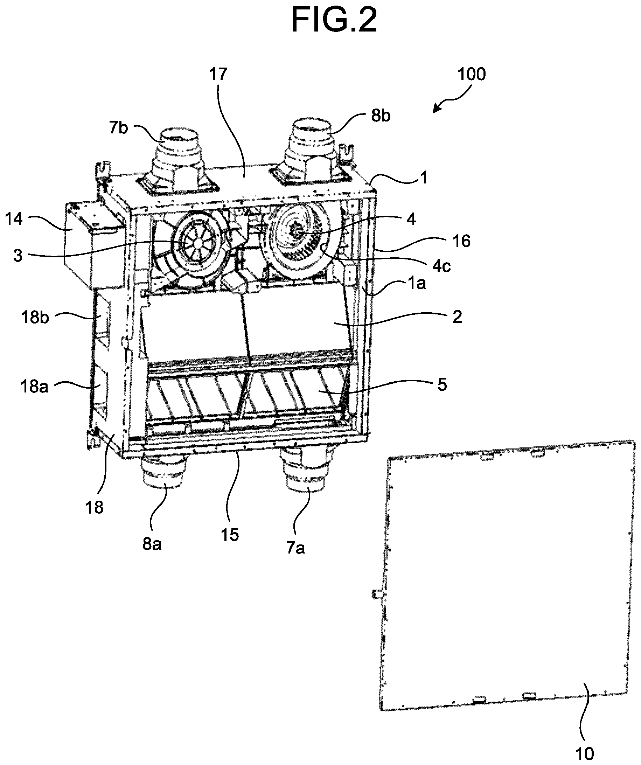

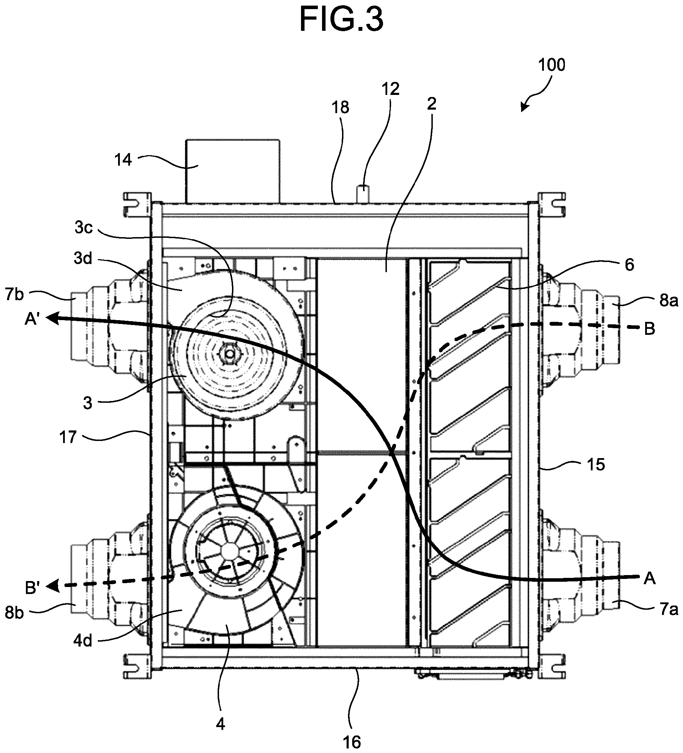

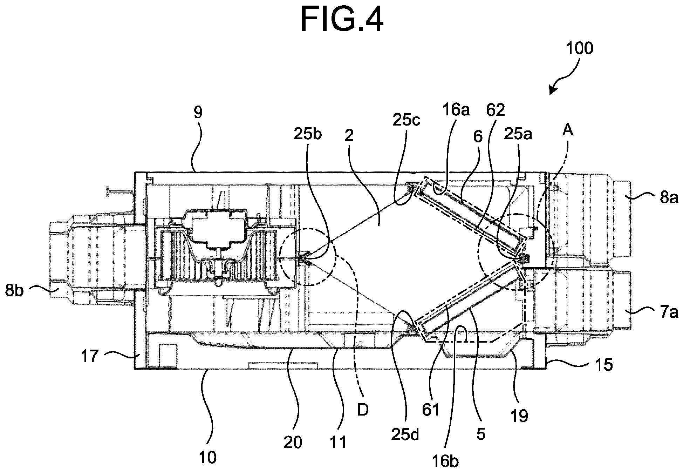

FIG. 1 is an exploded perspective view of a heat-exchange type ventilation apparatus according to a first embodiment of the present invention as viewed from the top surface side. FIG. 2 is an exploded perspective view of the heat-exchange type ventilation apparatus according to the first embodiment as viewed from the bottom surface side. FIG. 3 is a plan view of the heat-exchange type ventilation apparatus according to the first embodiment. FIG. 4 is a cross-sectional view of the heat-exchange type ventilation apparatus according to the first embodiment as viewed from the side thereof.

A heat-exchange type ventilation apparatus 100 according to the present embodiment includes a housing 1, which is a main body; a heat exchanger 2, an air supplying fan 3; an air discharging fan 4; a supply air filter 5; and a discharge air filter 6. The housing 1 includes an exterior-side inlet portion 7a; an interior-side inlet portion 8a; an interior-side outlet portion 7b; and an exterior-side outlet portion 8b formed therein. A supply air path that connects the exterior-side inlet portion 7a and the interior-side outlet portion 7b is formed in the housing 1. A discharge air path that connects the interior-side inlet portion 8a and the exterior-side outlet portion 8b is also formed in the housing 1.

The air supplying fan 3 is placed in the supply air path. The air supplying fan 3 generates a supply airflow that causes outside air (supply air) that is admitted through the exterior-side inlet portion 7a into the supply air path to flow out through the interior-side outlet portion 7b.

The air discharging fan 4 is placed in the discharge air path. The air discharging fan 4 generates a discharge airflow that causes inside air (discharge air) that is admitted through the interior-side inlet portion 8a into the discharge air path to flow out through the exterior-side outlet portion 8b.

The heat exchanger 2 is placed at the intersection portion of the supply air path and the discharge air path in the housing 1 and allows heat exchange between the supply airflow and the discharge airflow. The heat-exchange type ventilation apparatus 100 is a ventilation apparatus that provides ventilation while allowing heat exchange between the supply airflow and the discharge airflow.

The housing 1 includes six surfaces, i.e., a top plate 9, a bottom plate 10 opposite the top plate 9, and four side plates 15 to 18 closing the spaces between the top plate 9 and the bottom plate 10. The side plate 15 includes the exterior-side inlet portion 7a and the interior-side inlet portion 8a placed therein. The side plate 17, which is opposite the side plate 15, includes the interior-side outlet portion 7b and the exterior-side outlet portion 8b placed therein. In this case, the path passing from the exterior-side inlet portion 7a through the heat exchanger 2 to the air supplying fan 3 is the supply air path A-A', and the path passing from the interior-side inlet portion 8a through the heat exchanger 2 to the air discharging fan 4 is the discharge air path B-B' (see FIG. 3). The air supplying fan 3 and the air discharging fan 4 are disposed downstream of the heat exchanger 2 in their respective paths.

A control circuit 14 is attached to the side plate 18. As illustrated in FIG. 2, the side plate 18 has an opening 18a and an opening 18b, which can be used as ports to admit air into the discharge air path B-B', in addition to the interior-side inlet portion 8a. The opening 18a is connected upstream of the heat exchanger 2 and thus the air admitted from the opening 18a is discharged through the heat exchanger 2. The opening 18b is connected downstream of the heat exchanger 2 and thus the air admitted from the opening 18b is discharged without going through the heat exchanger 2. Consequently, when a duct in communication with the room is connected to the opening 18b, inside air is discharged without going through the heat exchanger 2 and thus heat exchange is not performed. It is possible to reduce the pressure loss needed for the air to pass through the heat exchanger 2 although heat exchange is not performed between inside air and outside air. In this manner, the load on the air discharging fan 4 can be reduced and thereby the power consumption can be reduced. The side plate 16, which is opposite the side plate 18, has openings 16a (third opening) and 16b (second opening), which are insertion apertures. The supply air filter 5 and the discharge air filter 6 can be inserted into the housing 1 through the openings 16a and 16b. Because maintenance can be performed on both of the supply air filter 5 and the discharge air filter 6 from one direction of the side plate 16, ease of cleaning can be improved.

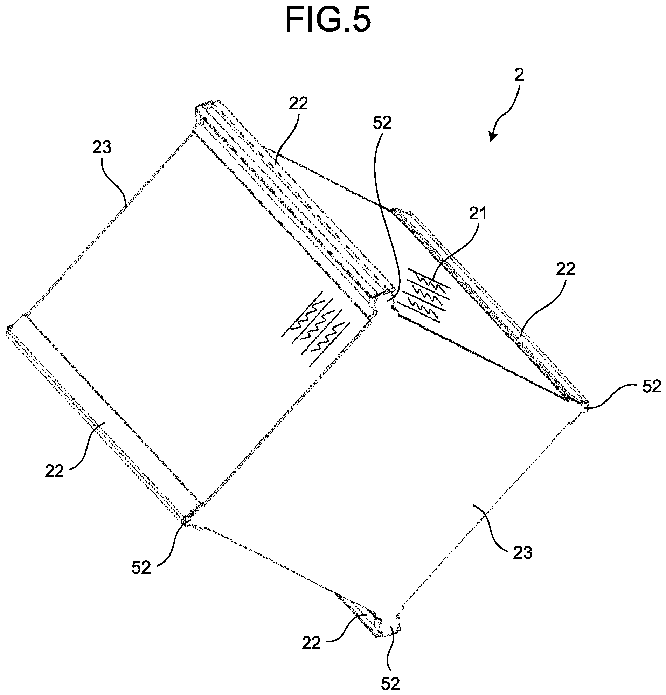

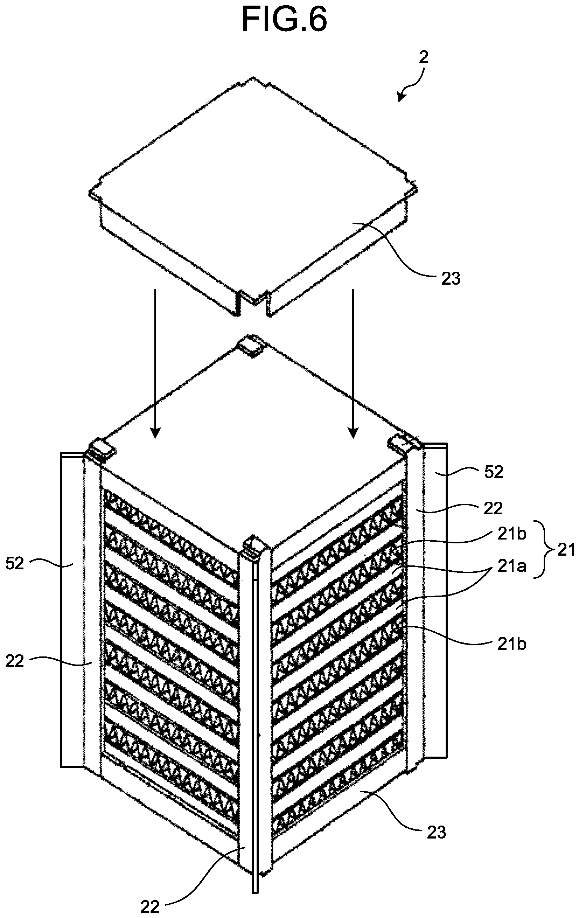

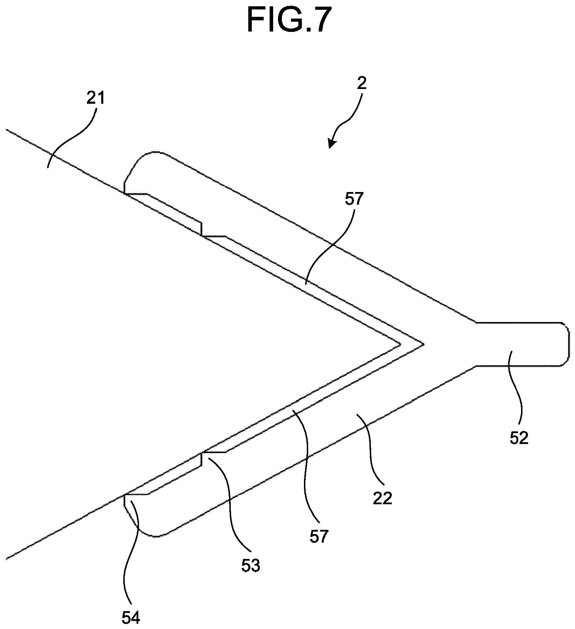

FIG. 5 is a perspective view of the heat exchanger 2 according to the first embodiment. FIG. 6 is an exploded perspective view of the heat exchanger 2 according to the first embodiment. FIG. 7 is a partially enlarged cross-sectional view of a corner portion of the heat exchanger 2 according to the first embodiment.

The heat exchanger 2 includes a heat exchange element 21, frame members 22, and end face members 23. The heat exchange element 21 is formed, for example, by alternately stacking partition members 21a, each of which is made from paper and has a sheet-like and polygonal shape, and spacing members 21b, each of which is made from paper and has a wave-like shape. In the present embodiment, the partition members 21a and the spacing members 21b have a square shape as viewed from the stacking direction of the partition members 21a, and thus, the heat exchange element 21 formed by stacking these members has a cuboid shape. The stacking direction of the partition members 21a is simply referred to as the stacking direction in the description hereinafter.

Spaces between the partition members 21a, which are spaced by the spacing members 21b, provide flow paths through which air can pass. By causing the supply airflow to pass through a flow path on one side of each of the partition members 21a and causing the discharge airflow to pass through a flow path on the other side thereof, the heat exchange element 21 can perform total heat exchange, sensible heat exchange, or latent heat exchange between the supply airflow and the discharge airflow via each of the partition members 21a. In the side surfaces of the heat exchange element 21, a supply air inlet surface 61, in which the supply airflow flows, and a discharge air inlet surface 62, in which the discharge airflow flows, are adjacent to each other.

Use of paper for the partition members 21a and the spacing members 21b enables a reduction in material cost. Additionally, condensate generated when the heat exchange is performed is retained in the partition members 21a and the spacing members 21b, which are made from paper; therefore, blockage of the flow paths due to formation of ice can be reduced. The edges of the heat exchange element 21 that extend in the stacking direction are each covered by the frame member 22.

The frame members 22 cover the edges of the heat exchange element 21 that extend in the stacking direction. As illustrated in FIGS. 5 and 7, each of the frame members 22 has an L-like shape in a section and faces two of the side surfaces of the heat exchange element 21 that extend from the edges of the heat exchange element 21. The surface of each frame member 22 opposite the surface thereof that faces the heat exchange element 21 has an outer protrusion 52 formed thereon that extends in the stacking direction.

The surface of each frame member 22 that faces the heat exchange element 21 has inner protrusions 53 and 54 formed thereon that extend in the stacking direction. The inner protrusion 53 and the inner protrusion 54 are formed on the surface of each frame member 22 that faces one of the surfaces of the heat exchange element 21 and they are spaced apart from each other in a direction perpendicular to the stacking direction. Because each frame member 22 faces two of the surfaces of the heat exchange element 21, two each of the inner protrusions 53 and the inner protrusions 54 are formed on each frame member 22. The inner protrusions 53 and 54 abut on the side surfaces of the heat exchange element 21 or dig into the side surfaces of the heat exchange element 21.

As illustrated in FIG. 6, the end face members 23 cover the end surfaces of the heat exchange element 21 in the stacking direction. The end face members 23 are elastic bodies having airtightness to prevent air from leaking from the heat exchange element 21 to the end surface sides. Each of the end face members 23 is an airtight gasket having a thickness and thus air is prevented from leaking with ease even when the heat exchanger 2 has contracted.

With reference back to FIGS. 1 to 4, the bottom plate 10 includes a drain pan 11 on the inner surface side, and the drain pan 11 includes a drain port 12. The drain pan 11 includes a supply-air-side drain pan 19 to retain water resulting from condensation, due to the heat exchanger 2 or the like, of moisture contained in the air admitted through the exterior-side inlet portion 7a. The drain pan 11 also includes a discharge-air-side drain pan 20 to retain water such as condensate generated when the heat exchanger 2 performs heat exchange between air admitted through the interior-side inlet portion 8a and air admitted through the exterior-side inlet portion 7a. The discharge-air-side drain pan 20 is in communication with the drain port 12; therefore, drain water can be discharged. If the amount of water retained in the supply-air-side drain pan 19 is large, a water path may be included to achieve passage to the discharge-air-side drain pan 20.

The heat exchanger 2 is inserted into the housing 1 through an opening 1a (first opening, see also FIG. 2) generated by removing the drain pan 11. The heat exchanger 2 is placed in the housing 1 such that one edge of the heat exchanger 2 that extends in the stacking direction and the diagonally opposite edge of the heat exchanger 2 are lined up vertically. By placing the heat exchanger 2 in such a manner, the area of heat exchange of the heat exchanger 2 can be used effectively and thereby an enhancement in thermal exchange efficiency can be achieved.

The housing 1 has support recess portions 25a to 25d formed therein to support the heat exchanger 2. The support recess portions 25a to 25d are grooves that extend in the stacking direction of the partition members 21a as placed in the housing 1.

The air supplying fan 3 and the air discharging fan 4 are placed on one side of the heat exchanger 2. The positions of the air supplying fan 3 and the air discharging fan 4 are downstream of the heat exchanger 2 in their respective paths. As illustrated in FIG. 2 and FIG. 3, the air supplying fan 3 and the air discharging fan 4 are placed in the housing 1 next to each other in the stacking direction of the partition members 21a such that their inlet ports 3c and 4c are oriented in opposite directions to each other and their outlet ports 3d and 4d are oriented in the same direction. This placement can reduce the housing 1 in size in the height direction.

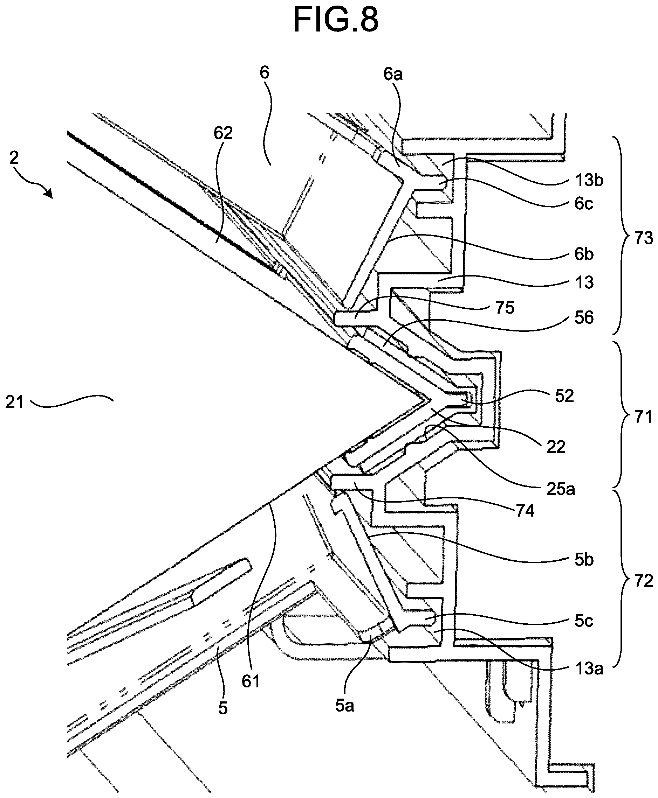

FIG. 8 is a partially enlarged cross-sectional view of a corner portion of the heat exchanger 2 accommodated in the housing 1 in the heat-exchange type ventilation apparatus 100 according to the first embodiment. In FIG. 8, the corner portion of the heat exchanger 2 on the side of the supply air filter 5 and the discharge air filter 6 in the housing 1 is enlarged.

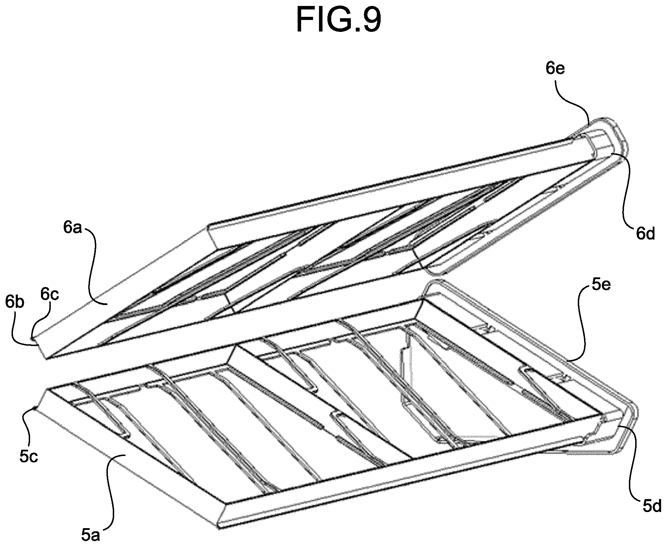

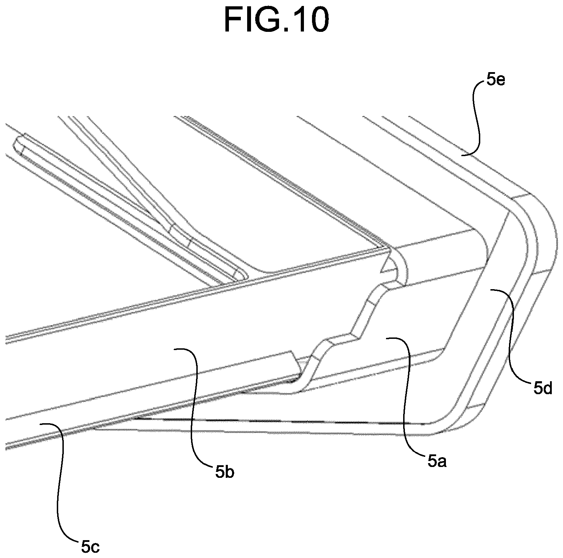

FIG. 9 is a perspective view of a supply air filter frame 5a included in the supply air filter 5 and a discharge air filter frame 6a included in the discharge air filter 6. FIG. 10 is a partially enlarged perspective view of the supply air filter frame 5a according to the first embodiment. The supply air filter 5 and the discharge air filter 6 include the supply air filter frame 5a and the discharge air filter frame 6a, which retain the filters formed from a nonwoven fabric or the like.

The supply air filter 5 is inserted into the housing 1 through the opening 16b, which is formed in the housing 1 (see also FIG. 1), to abut on the surface of the heat exchanger 2 that is located on the upstream side in the supply air path (see also FIG. 4). The discharge air filter 6 is inserted into the housing 1 through the opening 16a, which is formed in the housing 1 (see also FIG. 1), to abut on the surface of the heat exchanger 2 that is located on the upstream side in the discharge air path (see also FIG. 4).

As illustrated in FIG. 8, a rib frame body 13 that supports the supply air filter 5 and the discharge air filter 6 is formed. A facing surface 5b of the supply air filter frame 5a that faces the rib frame body 13 has a frame protrusion 5c that extends in the stacking direction formed thereon. A facing surface 6b of the discharge air filter frame 6a that faces the rib frame body 13 has a frame protrusion 6c that extends in the stacking direction formed thereon.

Of the support recess portions 25a to 25d that support the heat exchanger 2, the support recess portion 25a, which supports the side plate 15 side of the heat exchanger 2, is formed on the rib frame body 13. The outer protrusion 52 formed on one of the frame members 22 of the heat exchanger 2 is fitted in the support recess portion 25a. The heat exchanger 2 is positioned in the housing 1 when the outer protrusion 52 is fitted in the support recess portion 25a. As illustrated in FIG. 8, a seal material 56 may be interposed between the support recess portion 25a and the outer protrusion 52.

The rib frame body 13 has filter-frame guide recess portions 13a and 13b that extend in the stacking direction formed therein such that the support recess portion 25a is located between the filter-frame guide recess portions 13a and 13b. As illustrated in FIG. 8, the frame protrusion 5c, which is formed on the supply air filter frame 5a, and the frame protrusion 6c, which is formed on the discharge air filter frame 6a, are fitted in the filter-frame guide recess portions 13a and 13b, respectively. By fitting the frame protrusions 5c and 6c in the filter-frame guide recess portions 13a and 13b and sliding the supply air filter 5 and the discharge air filter 6, insertion and removal of the supply air filter 5 and the discharge air filter 6 in the stacking direction is guided. In this way, the supply air filter 5 and the discharge air filter 6 can be inserted and removed stably. Additionally, the supply air filter 5 and the discharge air filter 6 are positioned in the housing 1 when the frame protrusions 5c and 6c are fitted in the filter-frame guide recess portions 13a and 13b.

As illustrated in FIG. 9, the supply air filter frame 5a and the discharge air filter frame 6a respectively include a supply-air-filter sealing surface portion 5d and a discharge-air-filter sealing surface portion 6d to provide sealing between the supply air filter frame 5a and the discharge air filter frame 6a and the side plate 16 of the housing 1. As illustrated in FIGS. 9 and 10, in order to further improve the airtightness, the supply-air-filter sealing surface portion 5d has a rib-like protrusion 5e and the discharge-air-filter sealing surface portion 6d has a protrusion 6e. As illustrated in FIG. 9, a supply-air filter grip 5f and a discharge-air filter grip 6f that serve as parts to be held when the filters 5 and 6 are inserted and removed are included.

The opening 16b, which is formed in the side plate 16, has an enlarged opening portion so that insects and dust to be collected in the housing 1 can be cleaned from the housing 1. As illustrated in FIG. 9, the supply-air-filter sealing surface portion 5d has such a trapezoidal shape as to fit the shape of the opening 16b.

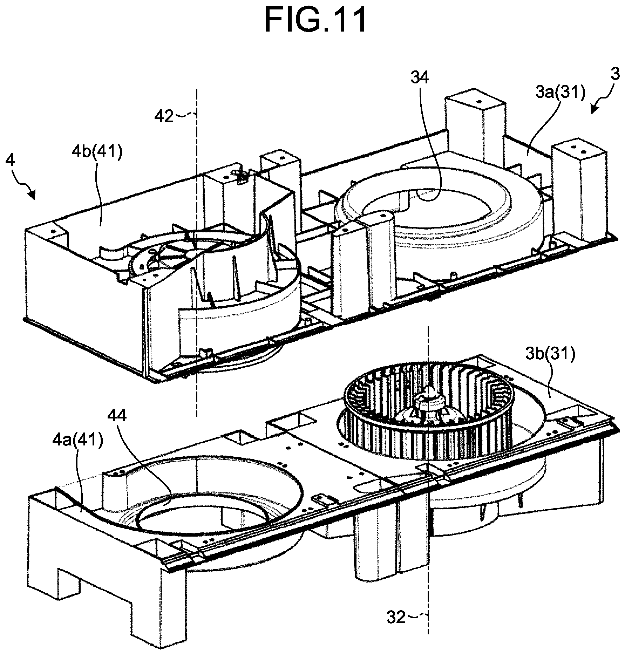

Of the support recess portions 25a to 25d, the support recess portion 25b, which is placed on the side of the air supplying fan 3 and the air discharging fan 4, is formed at the air supplying fan 3 and the air discharging fan 4. FIG. 11 is an exploded perspective view of the air supplying fan 3 and the air discharging fan 4 in the heat-exchange type ventilation apparatus 100 according to the first embodiment.

A casing 31 of the air supplying fan 3 includes an inlet-side casing 3a, which is a first casing, and a motor casing 3b, which is a second casing, and the inlet-side casing 3a and the motor casing 3b can be split from each other in a direction along a rotation axis 32 of a motor (not illustrated) at a splitting plane that is orthogonal to the rotation axis 32. The casing 31 is configured by combining the inlet-side casing 3a and the motor casing 3b. The inlet-side casing 3a includes an inlet portion 34 formed therein.

A casing 41 of the air discharging fan 4 includes an inlet-side casing 4a, which is a first casing, and a motor casing 4b, which is a second casing, and the inlet-side casing 4a and the motor casing 4b can be split from each other in a direction along a rotation axis 42 of a motor (not illustrated) at a splitting plane that is orthogonal to the rotation axis 42. The casing 41 is configured by combining the inlet-side casing 4a and the motor casing 4b. The inlet-side casing 4a includes an inlet portion 44 formed therein.

The inlet-side casing 3a of the air supplying fan 3 and the inlet-side casing 4a of the air discharging fan 4 are components having an identical shape. The motor casing 3b of the air supplying fan 3 and the motor casing 4b of the air discharging fan 4 are components having an identical shape. That is, the casing 31 of the air supplying fan 3 and the casing 41 of the air discharging fan 4 are components having an identical shape. In this manner, the number of components can be reduced and manufacturing costs can be suppressed.

The air supplying fan 3 and the air discharging fan 4 are placed next to each other such that the rotation axis 32 and the rotation axis 42 are parallel with each other and the inlet portions 34 and 44 face in opposite directions.

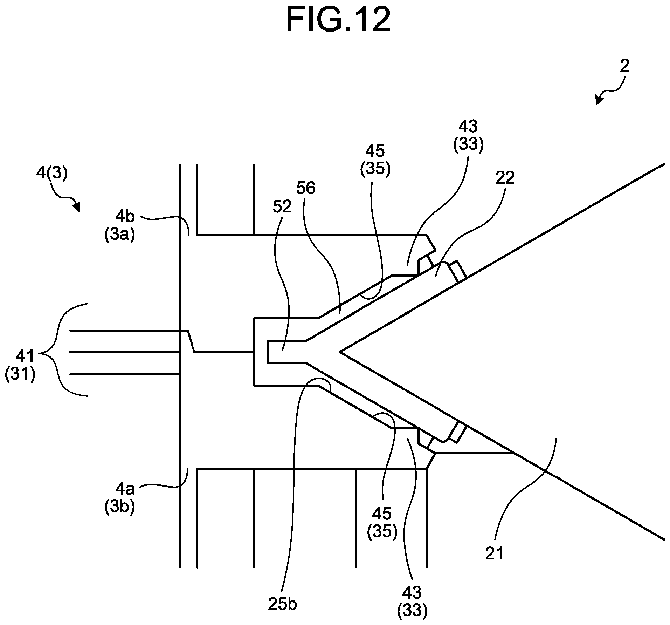

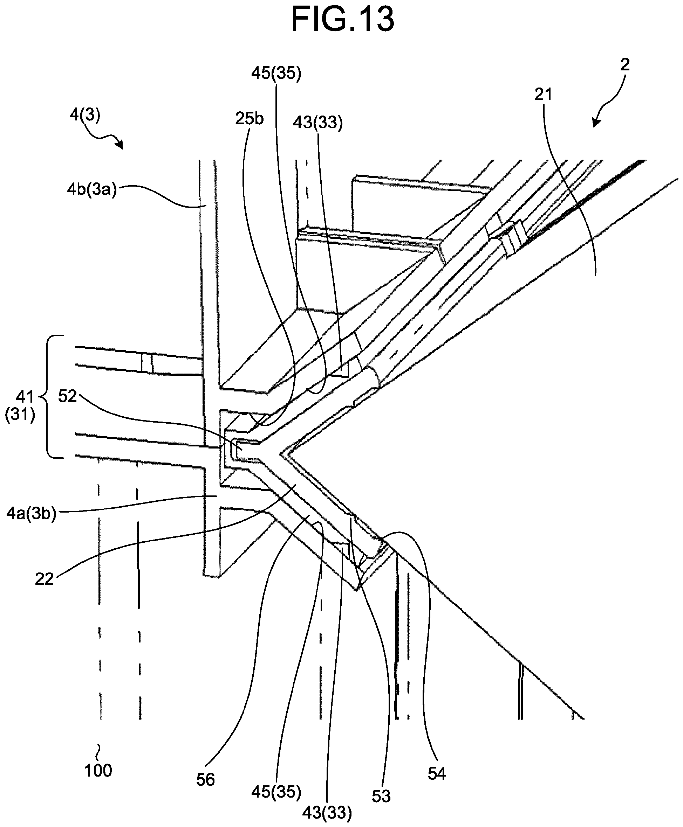

FIG. 12 is a partially enlarged cross-sectional view of a portion D illustrated in FIG. 4. FIG. 13 is a partially enlarged perspective view of the portion D illustrated in FIG. 4. The splitting plane between the inlet-side casing 4a and the motor casing 4b of the casing 41 of the air discharging fan 4 abuts on one of the edges of the heat exchanger 2 that extend in the stacking direction. The support recess portion 25b is formed at the splitting plane between the inlet-side casing 4a and the motor casing 4b. This means that the casing 41 of the air discharging fan 4 can be split into the inlet-side casing 4a and the motor casing 4b at its portion of the support recess portion 25b. The inlet-side casing 4a and the motor casing 4b have inclined surfaces 45 that face each other at the splitting plane. The support recess portion 25b is formed by the inclined surfaces 45, which face each other, by combining the inlet-side casing 4a and the motor casing 4b. The support recess portion 25b, which is formed by the inclined surfaces 45, is a V-shaped groove forming an angle less than 180°. The inclined surfaces 45, which form inner wall surfaces of the support recess portion 25b, have protrusions 43 extending in the stacking direction.

As is the case with the casing 41 of the air discharging fan 4, the splitting plane between the inlet-side casing 3a and the motor casing 3b of the casing 31 of the air supplying fan 3 abuts on one of the edges of the heat exchanger 2 that extend in the stacking direction. The support recess portion 25b is formed at the splitting plane between the inlet-side casing 3a and the motor casing 3b. The inlet-side casing 3a and the motor casing 3b have inclined surfaces 35 that face each other at the splitting plane. The support recess portion 25b is formed by the inclined surfaces 35, which face each other, by combining the inlet-side casing 3a and the motor casing 3b. The support recess portion 25b, which is formed by the inclined surfaces 35, is a V-shaped groove forming an angle less than 180°. The inclined surfaces 35, which form inner wall surfaces of the support recess portion 25b, have protrusions 33 extending in the stacking direction.

One of the frame members 22 and the corresponding one of the outer protrusions 52 of the heat exchanger 2 are fitted in the support recess portion 25b. The seal material 56 is interposed between the support recess portion 25b and the frame member 22. If a partition wall is placed between the air supplying fan 3 and the air discharging fan 4, and the heat exchanger 2, the support recess portion 25b may be formed in the partition wall.

The support recess portion 25c is formed on the top plate 9 side of the heat exchanger 2 in the housing 1, for example, in the top plate 9, although detailed illustration is omitted. The support recess portion 25d is formed on the bottom plate 10 side of the heat exchanger 2 in the housing 1, for example, in the drain pan 11. As in the case with the support recess portions 25a and 25b described above, the outer protrusions 52 of the frame members 22 are fitted in the support recess portions 25c and 25d. Additionally, the seal material 56 may be interposed between the support recess portion 25c and the corresponding one of the outer protrusions 52 and between the support recess portion 25d and the corresponding one of the outer protrusions 52. The inner wall surfaces of the support recess portions 25c and 25d may have protrusions extending in the stacking direction.

Next, the rib frame body 13 described with reference to FIG. 8 is described in more detail as well as a fixing method thereof and the like. The rib frame body 13 is a positioning member that retains the heat exchanger 2, the supply air filter 5, and the discharge air filter 6 to position them in the housing 1. A portion of the rib frame body 13, in which the support recess portion 25a is formed, is a heat-exchanger positioning portion 71, which retains and positions a corner portion of the heat exchanger 2. One of the corner portions of the heat exchanger 2, which is between the supply air inlet surface 61 and the discharge air inlet surface 62, is fitted in the support recess portion 25a formed in the heat-exchanger positioning portion 71.

A portion of the rib frame body 13, which is integrally formed with the heat-exchanger positioning portion 71 and has the filter-frame guide recess portion 13a formed therein, is a supply-air-filter positioning portion 72, which retains and positions the supply air filter 5. A retaining protrusion 74 formed in the supply-air-filter positioning portion 72 also contributes to positioning of the supply air filter 5 and guiding of the supply air filter 5 when the supply air filter 5 is inserted and removed.

A portion of the rib frame body 13, which is integrally formed with the heat-exchanger positioning portion 71 and has the filter-frame guide recess portion 13b formed therein, is a discharge-air-filter positioning portion 73, which retains and positions the discharge air filter 6. A retaining protrusion 75 formed in the discharge-air-filter positioning portion 73 also contributes to positioning of the discharge air filter 6 and guiding of the discharge air filter 6 when the discharge air filter 6 is inserted and removed.

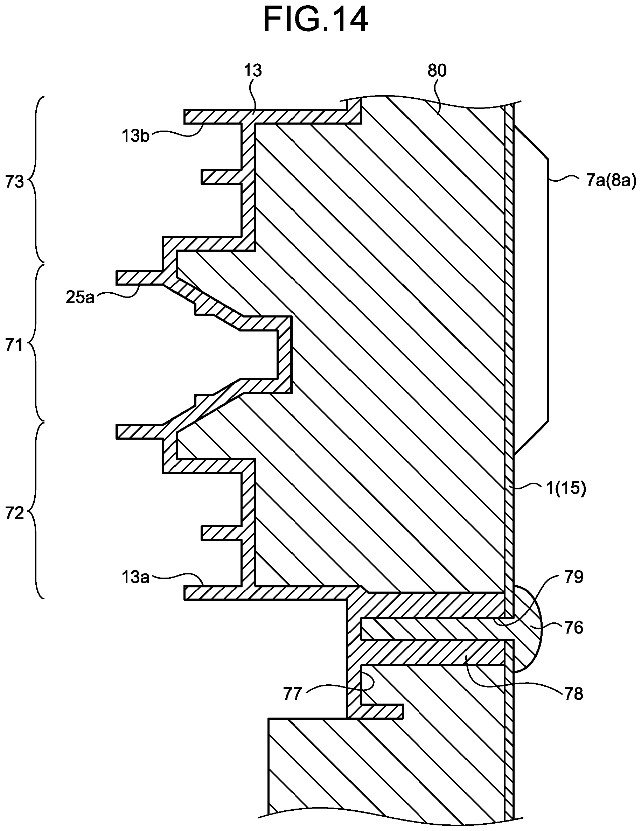

Next, the fixing method of the rib frame body 13 is described. FIG. 14 is a partially enlarged cross-sectional view of a portion A illustrated in FIG. 4, in which the heat exchanger 2, the supply air filter 5, and the discharge air filter 6 are omitted.

As illustrated in FIG. 14, the rib frame body 13 is fixed with a screw 76 inserted from the outside of the housing 1. In the rib frame body 13, a boss portion 78, which projects towards the side plate 15, is formed in a facing surface 77, which faces the side plate 15 of the housing 1. A screw hole 79, into which the screw 76 is screwed, is formed in a portion of the boss portion 78, which faces the side plate 15. The screw hole 79 does not penetrate the rib frame body 13. In other words, the screw hole 79 has a bottom surface.

Because the boss portion 78 is formed in the facing surface 77 of the rib frame body 13, a space is formed between the facing surface 77 and the side plate 15. A heat insulating portion 80 is placed in this space. The heat insulating portion 80 is made of foamed styrol, for example.

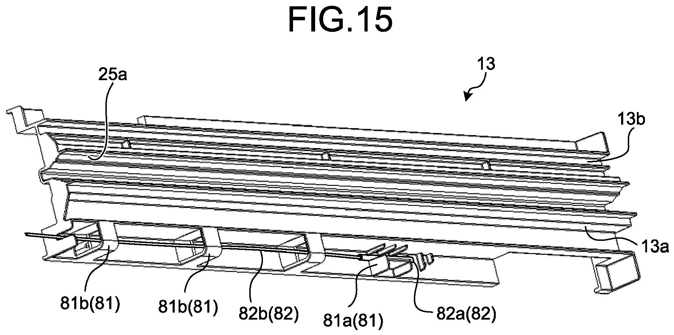

FIG. 15 is a perspective view of the rib frame body 13 according to the first embodiment. The rib frame body 13 has a retaining portion 81, which retains a temperature measuring portion 82, formed therein. The temperature measuring portion 82 is placed in a supply air path and measures the temperature of the supply airflow. The temperature measuring portion 82 includes a measuring body 82a, which measures the temperature, and a cable 82b, which connects the measuring body 82a and the control circuit 14 (see FIG. 1) to each other.

The retaining portion 81 includes a measuring-body retaining portion 81a, which retains the measuring body 82a, and a cable retaining portion 81b, which retains the cable 82b.

In the heat-exchange type ventilation apparatus 100 described above, the inner protrusions 53 and 54, which are formed on the frame members 22, are in line contact with the heat exchange element 21; thus, this is less likely to form a gap than a case in which the frame members 22 are in surface contact with the heat exchange element 21, and thereby airtightness can be improved. Additionally, as illustrated in FIG. 7, by interposing a seal material 57 in a gap between each of the frame members 22 and the heat exchange element 21, airtightness can be further improved.

Furthermore, the inner protrusions 53 and 54 can be used as marks indicative of an application area over which the seal material 57 is applied. Additionally, the inner protrusions 53 and 54 can be used as walls to prevent the seal material 57 from leaking from the gap between each of the frame members 22 and the heat exchange element 21. In particular, the inner protrusions 54, which are placed on the end portion sides of the inner protrusions 53 on each of the frame members 22, tend to function as walls to prevent the seal material 57 from leaking. By forming the inner protrusions 54 as end-portion-side protrusions on the end portions of each of the frame members 22, the inner protrusions 54 can function as walls to prevent the leaking more reliably. The number of inner protrusions formed on the surface of each frame member 22 that faces one of the surfaces of the heat exchange element 21 may be one, or may be three or more.

Additionally, the fitting structure in which the outer protrusions 52 of the frame members 22 are fitted in the support recess portions 25a to 25d can achieve an improvement in airtightness between the heat exchanger 2 and the housing 1. Furthermore, even when the heat exchanger 2 has contracted due to deterioration over time, the airtightness between the heat exchanger 2 and the housing 1 is maintained as long as the outer protrusions 52 are fitted in the support recess portions 25a to 25d. That is, even when the heat exchanger 2 has contracted, the airtightness is maintained with ease. Moreover, even when the dimensions of the heat exchanger 2 vary due to manufacturing errors, the airtightness between the heat exchanger 2 and the housing 1 is maintained as long as the degree of variation is such that the outer protrusions 52 are allowed to be fitted in the support recess portions 25a to 25d. Moreover, by interposing the seal material 56 between the outer protrusions 52 and the support recess portions 25a to 25d, the airtightness is maintained further reliably when the heat exchanger 2 has contracted. Furthermore, when the outer protrusions 52 are fitted in the support recess portions 25a to 25d in greater depths, the airtightness can be maintained even when the heat exchanger 2 has a greater contraction.

Furthermore, as long as the outer protrusions 52 are fitted in the support recess portions 25a to 25d, shifting in position of the heat exchanger 2 and falling of the heat exchanger 2 in the housing 1 can be prevented even when the heat exchanger 2 has contracted. Additionally, the frame members 22 reinforce the heat exchanger 2; thus, the product life can be extended.

Additionally, the frame protrusion 5c, which is formed on the supply air filter frame 5a, and the frame protrusion 6c, which is formed on the discharge air filter frame 6a, are fitted in the filter-frame guide recess portions 13a and 13b; thus, such a fitting structure can achieve an improvement in airtightness between the supply air filter frame 5a and the discharge air filter frame 6a, and the housing 1. In this way, air can be prevented from passing through the supply air path and the discharge air path without going through the supply air filter 5 and the discharge air filter 6.

Further, the heat-exchanger positioning portion 71, the supply-air-filter positioning portion 72, and the discharge-air-filter positioning portion 73 are integrally formed with one another in the rib frame body 13. It is possible to reduce the number of components and suppress the manufacturing cost compared with a case where a member for positioning the heat exchanger 2, a member for positioning the supply air filter 5, and a member for positioning the discharge air filter 6 are provided separately.

In addition, because the rib frame body 13 is fixed with the screw 76 inserted from the outside of the housing 1, the screw 76 is not exposed to the supply air path and the discharge air path in the housing 1. Therefore, it is possible to reduce the possibility that the screw 76 is cooled by the air passing through the supply air path or the discharge air path to cause condensation outside the housing 1. For this reason, it is not necessary to cover the outside of the housing 1 with a heat insulating material. Accordingly, the manufacturing cost can be suppressed due to the reduction of materials to be used. Further, because the housing 1 made of metal is usually higher in strength than a heat insulating material, the heat-exchange type ventilation apparatus according to the first embodiment is less likely to be broken than a heat-exchange type ventilation apparatus with a heat insulating material provided outside thereof. Therefore, ease of handling can be improved.

Furthermore, because the retaining portion 81, which retains the temperature measuring portion 82, is formed, it is not necessary to additionally provide a member for retaining the temperature measuring portion 82. Therefore, the manufacturing cost can be suppressed due to the reduction of the number of components and omission of a work for fixing the member for retaining the temperature measuring portion 82 to the housing 1 or the like.

### Reference Signs List

1 housing, 2 heat exchanger, 3 air supplying fan, 4 air discharging fan, 5 supply air filter, 6 discharge air filter, 7a exterior-side inlet portion, 7b interior-side outlet portion, 8a interior-side inlet portion, 8b exterior-side outlet portion, 9 top plate, 10 bottom plate, 11 drain pan, 13 rib frame body, 19 supply-air-side drain pan, 20 discharge-air-side drain pan, 21 heat exchange element, 21a partition member, 21b spacing member, 22 frame member, 23 end face member, 25a, 25b, 25c, 25d support recess portion, 52 outer protrusion, 53, 54 inner protrusion, 56, 57 seal material, 61 supply air inlet surface, 62 discharge air inlet surface, 71 heat-exchanger positioning portion, 72 supply-air-filter positioning portion, 73 discharge-air-filter positioning portion, 74, 75 retaining protrusion, 76 screw, 77 facing surface, 78 boss portion, 79 screw hole, 80 heat insulating portion, 81 retaining portion, 81a measuring-body retaining portion, 81b cable retaining portion, 82 temperature measuring portion, 82a measuring body, 82b cable, 100 heat-exchange type ventilation apparatus.

## Claims

1. A heat-exchange type ventilation apparatus (100) comprising:
a main body (1) in which a supply air path and a discharge air path are formed, the supply air path comprising an exterior inlet portion (7a) to admit outside air and an interior outlet portion (7b) to discharge the outside air, the discharge air path comprising an interior inlet portion (8a) to admit inside air and an exterior outlet portion (8b) to discharge the inside air;
an air supplying fan (3) placed in the supply air path;
an air discharging fan (4) placed in the discharge air path;
a heat exchanger (2) to allow heat exchange between a supply airflow passing through the supply air path and a discharge airflow passing through the discharge air path, the heat exchanger (2) including a plurality of sheet-like partition members (21a) stacked with spacing therebetween so as to have a polygonal prismatic shape, the heat exchanger (2) having a supply air inlet surface (61), in which the supply airflow flows, and a discharge air inlet surface (62), in which the discharge airflow flows and which is adjacent to the supply air inlet surface (61), formed as adjacent side surfaces;
a supply air filter (5) covering the supply air inlet surface (61);
a discharge air filter (6) covering the discharge air inlet surface (62); and
a positioning member (13) fixed inside the main body (1) and including a heat-exchanger positioning portion (71), a supply-air-filter positioning portion (72), and a discharge-air-filter positioning portion (73) that are integrally formed with one another, the heat-exchanger positioning portion (71) retaining a corner portion of the heat exchanger (2) between the supply air inlet surface (61) and the discharge air inlet surface (62) to position the heat exchanger (2), the supply-air-filter positioning portion (72) retaining the supply air filter (5) to position the supply air filter (5), the discharge-air-filter positioning portion (73) retaining the discharge air filter (6) to position the discharge air filter (6), wherein the heat-exchange type ventilation apparatus (100) further includes a heat insulating portion (80) between a facing surface (77) of the positioning member (13) that faces the main body (1) and the main body (1), **characterized in that**
the positioning member (13) is fixed with a screw (76) inserted from outside of the main body (1),
the positioning member (13) has a screw hole (79) into which the screw (76) is screwed, in the facing surface (77),
a boss portion (78) that projects towards the main body (1) is formed in the facing surface (77) of the positioning member (13), and
the screw hole (79) is formed in the boss portion (78).

2. The heat-exchange type ventilation apparatus (100) according to claim 1, wherein
the supply-air-filter positioning portion (72) and the discharge-air-filter positioning portion (73) each have a filter-frame guide recess portion (13a, 13b),
the supply air filter (5) includes a supply air filter frame (5a) on which a frame protrusion (5c) is formed,
the discharge air filter (6) includes a discharge air filter frame (6a) on which a frame protrusion (6c) is formed,
the frame protrusion (5c) formed on the supply air filter frame (5a) is fitted in the filter-frame guide recess portion (13a) of the supply-air-filter positioning portion (72), and
the frame protrusion (6c) formed on the discharge air filter frame (6a) is fitted in the filter-frame guide recess portion (13b) of the discharge-air-filter positioning portion (73).

3. The heat-exchange type ventilation apparatus (100) according to claim 1 or 2, further comprising a temperature measuring portion (82) to measure a temperature of the supply airflow, the temperature measuring portion (82) being placed in the supply air path, wherein
the positioning member (13) includes a retaining portion (81) that retains the temperature measuring portion (82) .

4. The heat-exchange type ventilation apparatus (100) according to any one of claims 1 to 3, wherein
the main body (1) has a first opening (1a), a second opening (16b), and a third opening (16a) formed therein, the first opening (1a) allowing the heat exchanger (2) to be inserted into the main body (1) in a direction perpendicular to a stacking direction of the partition members (21a), the second opening (16b) allowing the supply air filter (5) to be inserted into the main body (1) in a direction parallel to the stacking direction of the partition members (21a), the third opening (16a) allowing the discharge air filter (6) to be inserted into the main body (1) in the direction parallel to the stacking direction of the partition members (21a),
the supply-air-filter positioning portion (72) guides insertion of the supply air filter (5), and
the discharge-air-filter positioning portion (73) guides insertion of the discharge air filter (6).

## Patentansprüche

1. Belüftungsvorrichtung (100) vom Wärmetauschtyp, die Folgendes umfasst:
einen Hauptkörper (1), in dem ein Versorgungsluftpfad und ein Abluftpfad ausgebildet sind, wobei der Versorgungsluftpfad einen äußeren Einlassabschnitt (7a) zum Einlassen von Außenluft und einen inneren Auslassabschnitt (7b) zum Ausstoßen der Außenluft umfasst, wobei der Abluftpfad einen inneren Einlassabschnitt (8a) zum Einlassen von Innenluft und einen äußeren Auslassabschnitt (8b) zum Ausstoßen der Innenluft umfasst;
ein Luftzufuhrgebläse (3), das in dem Versorgungsluftpfad angeordnet ist;
ein Luftausstoßgebläse (4), das in dem Abluftpfad angeordnet ist;
einen Wärmetauscher (2), um Wärmeaustausch zwischen einem durch den Versorgungsluftpfad hindurchtretenden Versorgungsluftstrom und einem durch den Abluftpfad hindurchtretenden Abluftstrom zu ermöglichen, wobei der Wärmetauscher (2) eine Vielzahl von plattenähnlichen Trennelementen (21a) umfasst, die mit einer Beabstandung dazwischen aufeinander gestapelt sind, um eine polygonale prismatische Form aufzuweisen, wobei der Wärmetauscher (2) eine Versorgungslufteinlassoberfläche (61) aufweist, in der der Versorgungsluftstrom strömt, und eine Ablufteinlassoberfläche (62), in der der Abluftstrom strömt und die benachbart zu der Versorgungslufteinlassoberfläche (61) vorliegt, die als benachbarte Seitenoberflächen ausgebildet sind;
einen Versorgungsluftfilter (5), der die Versorgungslufteinlassoberfläche (61) abdeckt;
einen Abluftfilter (6), der die Ablufteinlassoberfläche (62) bedeckt; und
ein Positionierungselement (13), das im Inneren des Hauptkörpers (1) befestigt ist und einen Wärmetauscherpositionierungsabschnitt (71), einen Versorgungsluftfilterpositionierungsabschnitt (72) und einen Abluftfilterpositionierungsabschnitt (73) umfasst, die einstückig miteinander ausgebildet sind, wobei der Wärmetauscherpositionierungsabschnitt (71) einen Eckabschnitt des Wärmetauschers (2) zwischen der Versorgungslufteinlassoberfläche (61) und der Ablufteinlassoberfläche (62) festhält, um den Wärmetauscher (2) zu positionieren, der Versorgungsluftfilterpositionierungsabschnitt (72) den Versorgungsluftfilter (5) festhält, um den Versorgungsluftfilter (5) zu positionieren, der Abluftfilterpositionierungsabschnitt (73) den Abluftfilter (6) festhält, um den Abluftfilter (6) zu positionieren, wobei die Belüftungsvorrichtung (100) vom Wärmetauschtyp ferner einen Wärmeisolierungsabschnitt (80) zwischen einer zugewandten Oberfläche (77) des Positionierungselements (13), die dem Hauptkörper (1) zugewandt ist, und dem Hauptkörper umfasst,
**dadurch gekennzeichnet, dass**:
das Positionierungselement (13) mit einer Schraube (76) fixiert ist, die von der Außenseite des Hauptkörpers (1) eingeführt ist,
das Positionierungselement (13) ein Schraubenloch (79) in der zugewandten Oberfläche (77) aufweist, in das die Schraube (76) eingeschraubt ist,
ein Vorsprungsabschnitt (78), der in Richtung des Hauptkörpers (1) vorsteht, in der zugewandten Oberfläche (77) des Positionierungselements (13) ausgebildet ist, und
das Schraubenloch (79) in dem Vorsprungsabschnitt (78) ausgebildet ist.

2. Belüftungsvorrichtung (100) vom Wärmetauschtyp nach Anspruch 1, wobei
der Versorgungsluftfilterpositionierungsabschnitt (72) und der Abluftfilterpositionierungsabschnitt (73) jeweils einen Filterrahmenführungsausnehmungsabschnitt (13a, 13b) aufweisen,
der Versorgungsluftfilter (5) einen Versorgungsluftfilterrahmen (5a) umfasst, an dem ein Rahmenvorsprung (5c) ausgebildet ist,
der Abluftfilter (6) einen Abluftfilterrahmen (6a) umfasst, an dem ein Rahmenvorsprung (6c) ausgebildet ist,
der Rahmenvorsprung (5c), der an dem Versorgungsluftfilterrahmen (5a) ausgebildet ist, in den Filterrahmenführungsausnehmungsabschnitt (13a) des Versorgungsluftfilterpositionierungsabschnitts (72) eingepasst ist, und
der Rahmenvorsprung (6c), der an dem Abluftfilterrahmen (6a) ausgebildet ist, in den Filterrahmenführungsausnehmungsabschnitt (13b) des Abluftfilterpositionierungsabschnitts (73) eingepasst ist.

3. Belüftungsvorrichtung (100) vom Wärmetauschtyp nach Anspruch 1 oder 2, die ferner einen Temperaturmessabschnitt (82) zur Messung einer Temperatur des Versorgungsluftstroms umfasst, wobei der Temperaturmessabschnitt (82) in dem Versorgungsluftpfad angeordnet ist, wobei
das Positionierungselement (13) einen Rückhalteabschnitt (81) umfasst, der den Temperaturmessabschnitt (82) festhält.

4. Belüftungsvorrichtung (100) vom Wärmetauschtyp nach einem der Ansprüche 1 bis 3, wobei
der Hauptkörper (1) eine erste Öffnung (1a), eine zweite Öffnung (16b) und eine dritte Öffnung (16a) in diesem ausgebildet aufweist, wobei die erste Öffnung (1a) ermöglicht, dass der Wärmetauscher (2) in den Hauptkörper (1) in eine Richtung normal auf eine Stapelrichtung der Trennelemente (21a) eingeführt wird, die zweite Öffnung (16b) ermöglicht, dass der Versorgungsluftfilter (5) in eine Richtung parallel zu der Stapelrichtung der Trennelemente (21a) in den Hauptkörper (1) eingeführt wird, die dritte Öffnung (16a) ermöglicht, dass der Abluftfilter (6) in die Richtung parallel zur Stapelrichtung der Trennelemente (21a) in den Hauptkörper (1) eingeführt wird,
der Versorgungsluftfilterpositionierungsabschnitt (72) das Einführen des Versorgungsluftfilters (5) führt und
der Abluftfilterpositionierungsabschnitt (73) das Einführen des Abluftfilters (6) führt.

## Revendications

1. Appareil de ventilation de type à échange de chaleur (100) comprenant :
un corps principal (1) dans lequel sont formées une voie d'air d'alimentation et une voie d'air d'évacuation, la voie d'air d'alimentation comprenant une partie d'entrée extérieure (7a) pour admettre de l'air extérieur et une partie de sortie intérieure (7b) pour évacuer l'air extérieur, la voie d'air d'évacuation comprenant une partie d'entrée intérieure (8a) pour admettre de l'air intérieur et une partie de sortie extérieure (8b) pour évacuer l'air intérieur ;
une soufflante d'alimentation en air (3) disposée dans la voie d'air d'alimentation ;
une soufflante d'évacuation d'air (4) disposée dans la voie d'air d'évacuation ;
un échangeur de chaleur (2) pour permettre l'échange de chaleur entre un flux d'air d'alimentation passant à travers la voie d'air d'alimentation et un flux d'air d'évacuation passant à travers la voie d'air d'évacuation, l'échangeur de chaleur (2) incluant une pluralité d'éléments formant cloisons de type feuille (21a) empilés avec un espacement entre eux de sorte à avoir une forme prismatique polygonale, l'échangeur de chaleur (2) ayant une surface d'entrée d'air d'alimentation (61), dans laquelle s'écoule le flux d'air d'alimentation, et une surface d'entrée d'air d'évacuation (62) dans laquelle s'écoule le flux d'air d'évacuation et qui est adjacente à la surface d'entrée d'air d'alimentation (61), formées comme des surfaces latérales adjacentes ;
un filtre d'air d'alimentation (5) couvrant la surface d'entrée d'air d'alimentation (61) ;
un filtre d'air d'évacuation (6) couvrant la surface d'entrée d'air d'évacuation (62) ; et
un élément de positionnement (13) fixé à l'intérieur du corps principal (1) et incluant une partie de positionnement d'échangeur de chaleur (71), une partie de positionnement de filtre d'air d'alimentation (72) et une partie de positionnement de filtre d'air d'évacuation (73) qui sont formées d'un seul tenant les unes avec les autres, la partie de positionnement d'échangeur de chaleur (71) maintenant une partie d'angle de l'échangeur de chaleur (2) entre la surface d'entrée d'air d'alimentation (61) et la surface d'entrée d'air d'évacuation (62) pour positionner l'échangeur de chaleur (2), la partie de positionnement de filtre d'air d'alimentation (72) maintenant le filtre d'air d'alimentation (5) pour positionner le filtre d'air d'alimentation (5), la partie de positionnement de filtre d'air d'évacuation (73) maintenant le filtre d'air d'évacuation (6) pour positionner le filtre d'air d'évacuation (6), dans lequel l'appareil de ventilation de type à échange de chaleur (100) inclut en outre une partie d'isolation thermique (80) entre une surface frontale (77) de l'élément de positionnement (13) qui fait face au corps principal (1) et le corps principal (1), **caractérisé en ce que**
l'élément de positionnement (13) est fixé avec une vis (76) insérée depuis l'extérieur du corps principal (1),
l'élément de positionnement (13) a un trou de vis (79) dans lequel la vis (76) est vissée, dans la surface frontale (77),
une partie formant bossage (78) qui fait saillie vers le corps principal (1) est formée dans la surface frontale (77) de l'élément de positionnement (13), et
le trou de vis (79) est formé dans la partie formant bossage (78).

2. Appareil de ventilation de type à échange de chaleur (100) selon la revendication 1, dans lequel
la partie de positionnement de filtre d'air d'alimentation (72) et la partie de positionnement de filtre d'air d'évacuation (73) ont chacune une partie d'évidement de guide de cadre de filtre (13a, 13b),
le filtre d'air d'alimentation (5) inclut un cadre de filtre d'air d'alimentation (5a) sur lequel est formée une saillie de cadre (5c),
le filtre d'air d'évacuation (6) inclut un cadre de filtre d'air d'évacuation (6a) sur lequel est formée une saillie de cadre (6c),
la saillie de cadre (5c) formée sur le cadre de filtre d'air d'alimentation (5a) est ajustée dans la partie formant évidement de guide de cadre de filtre (13a) de la partie de positionnement de filtre d'air d'alimentation (72), et
la saillie de cadre (6c) formée sur le cadre de filtre d'air d'évacuation (6a) est ajustée dans la partie formant évidement de guide de cadre de filtre (13b) de la partie de positionnement de filtre d'air d'évacuation (73).

3. Appareil de ventilation de type à échange de chaleur (100) selon la revendication 1 ou 2, comprenant en outre une partie de mesure de température (82) pour mesurer une température du flux d'air d'alimentation, la partie de mesure de température (82) étant placée dans la voie d'air d'alimentation, dans lequel
l'élément de positionnement (13) inclut une partie de maintien (81) qui maintient la partie de mesure de température (82).

4. Appareil de ventilation de type à échange de chaleur (100) selon l'une quelconque des revendications 1 à 3, dans lequel
le corps principal (1) a une première ouverture (1a), une deuxième ouverture (16b) et une troisième ouverture (16a) formées dans celui-ci, la première ouverture (1a) permettant à l'échangeur de chaleur (2) d'être inséré dans le corps principal (1) dans une direction perpendiculaire à une direction d'empilement des éléments formant cloisons (21a), la deuxième ouverture (16b) permettant au filtre d'air d'alimentation (5) d'être inséré dans le corps principal (1) dans une direction parallèle à la direction d'empilement des éléments formant cloisons (21a), la troisième ouverture (16a) permettant au filtre d'air d'évacuation (6) d'être inséré dans le corps principal (1) dans la direction parallèle à la direction d'empilement des éléments formant cloisons (21a),
la partie de positionnement de filtre d'air d'alimentation (72) guide l'insertion du filtre d'air d'alimentation (5), et
la partie de positionnement de filtre d'air d'évacuation (73) guide l'insertion du filtre d'air d'évacuation (6) .
